(19) Europäisches Patentamt
European Patent Office
Office européen des brevets

(11) EP 0 884 687 A1

(12) EUROPEAN PATENT APPLICATION

(43) Date of publication:
16.12.1998 Bulletin 1998/51

(51) Int. Cl.$^6$: G06F 17/17

(21) Application number: 98110175.1

(22) Date of filing: 04.06.1998

(84) Designated Contracting States:
AT BE CH CY DE DK ES FI FR GB GR IE IT LI LU
MC NL PT SE
Designated Extension States:
AL LT LV MK RO SI

(30) Priority: 10.06.1997 JP 152563/97

(71) Applicant:
MATSUSHITA ELECTRIC INDUSTRIAL CO., LTD.
Kadoma-shi, Osaka-fu (JP)

(72) Inventors:
• Tanaka, Koichiro
Takarazuka-shi, Hyogo-ken (JP)
• Fukumoto, Yoshihiko
Muko-shi, Kyoto-fu (JP)

(74) Representative:
Altenburg, Udo, Dipl.-Phys. et al
Patent- und Rechtsanwälte
Bardehle - Pagenberg - Dost - Altenburg -
Geissler - Isenbruck,
Gallileiplatz 1
81679 München (DE)

(54) Interpolating device

(57) With interpolating processing for an input signal series $x_n$ by delay elements $11_1$ to $11_N$, coefficient multiplying portions $12_0$ to $12_N$ and adders $13_1$ to $13_N$, a fixed coefficient filter 11 outputs three signals, $x_{n-M}$, $X_{n-M+1}$, and a midpoint $x((n-M)T+T/2)$ between $x_{n-M}$ and $X_{n-M+1}$ obtained by delaying the input signal series $x_n$. A selecting portion 211 selects two output signals from the above three signals according to time $\tau$ for obtaining an interpolated value under an instruction by a comparator 213. An interpolated value calculating portion 212 then performs linear interpolation between the two output signals selected by the selecting portion 211 according to the time $\tau$ for obtaining the interpolated value using a linear interpolation factor R set by the comparator 213, a switch 216 and a divider 217. This requires only a small number of coefficients to be stored in the interpolating device and no switching of coefficients for every change in time for obtaining the interpolated value, allowing high speed interpolating processing.

FIG. 1

## Description

## BACKGROUND OF THE INVENTION

### Field of the Invention

This invention relates to interpolating devices, and more specifically to an interpolating device for calculating an interpolated value at an arbitrary time point with respect to an input signal series by digital signal processing.

### Description of the Background Art

Generally, the following equation (1) is used in order to obtain an interpolated value $y(nT+\tau)$ at arbitrary time $nT+\tau$ (n is an integer, $0 \leq \tau < T$; ditto for the following) based on an input signal series $x_i$ (i is an integer) with a period T.

$$y(nT+\tau) = \sum_{i=0}^{N} x_{n-i} h(iT+\tau) \qquad (1)$$

$x_{n-i}$ is an input signal at time $(n-i)T$ and $h(t)$ is an interpolation function such as an impulse response of a cosine roll off filter, the Lagrange's interpolation polynomial or the like. In general, the value of $h(iT+\tau)$ becomes so small that it may be negligible as i becomes larger than a certain value (hereinafter referred to as a threshold value). Therefore, in calculation of an interpolated value, no particular problem occurs if the value of $h(iT+\tau)$ with respect to i more than the threshold value is excluded. Thus, a variable N (N is an integer $1 \leq N$) in the equation (1) shows the threshold value.

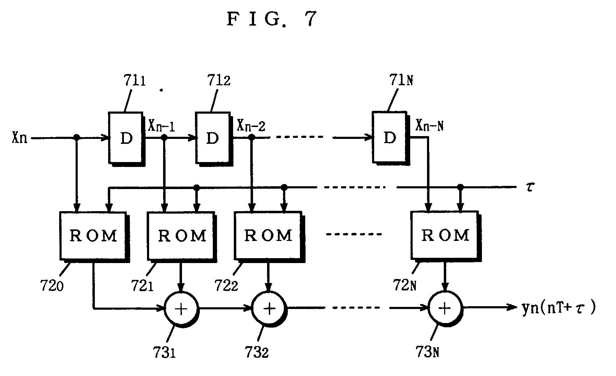

Conventionally, an interpolating device disclosed in Japanese Patent Laying-Open No. 8-204506 (hereinafter referred to a conventional reference) is known. FIG. 7 shows a block diagram of the interpolating device disclosed in the conventional reference. The interpolating device disclosed in the conventional reference constructs a time variable coefficient filter as a hardware in order to be adapted to input/output data with a high sample frequency.

Described briefly below is interpolating operation of the conventional interpolating device.

In FIG. 7, the interpolating device disclosed in the conventional reference includes delay elements $71_1$ to $71_N$, read-only-memories (hereinafter referred to as ROMs) $72_0$ to $72_N$, and adders $73_1$ to $73_N$. The delay elements $71_1$ to $71_N$ delay and then output inputted data. Written in the ROMs $72_0$ to $72_N$ are a plurality of values $X_{n-i} h(iT+\tau)$ (i=0 to N, ditto for the following) each corresponding to combinations of input data $X_n$ - $X_{n-N}$ and interpolating time $\tau$. The adders $73_1$ to $73_N$ respectively add a value $X_{n-i} h(iT+\tau)$ selected from the ROMs $72_0$ to $72_N$. This addition solves the equation (1) and as a result an interpolated value at arbitrary time $nT+\tau$ can

be obtained.

The interpolating device disclosed in this way in the conventional reference has the ROMs $72_0$ to $72_N$ specifically for each of input signal series $X_n$ - $X_{n-N}$, and further, each of the ROMs $72_0$ to $72_N$ has storage capacity proportional to resolution of the interpolating time $\tau$. Moreover, the interpolating device disclosed in the conventional reference is adapted to changes in the interpolating time $\tau$ by momentarily switching among addresses in which the value $x_{n-i} h(iT+\tau)$ in the ROMs $72_0$ to $72_N$ is stored.

Through the above processing, the interpolating device disclosed in the conventional reference realizes an interpolating device adapted to input/output data with a high sample frequency.

However, as described above, in the interpolating device disclosed in the conventional reference, it is necessary for the ROMs $72_0$ to $72_N$ specifically for the input signal series $X_n$ - $X_{n-N}$ to have capacity proportional to resolution of the interpolating time $\tau$. That is, since the value $x_{n-i} h(iT+\tau)$ corresponding to all of the time $\tau$ for obtaining an interpolated value has to be stored in the ROMs $72_0$ to $72_N$, there is a problem that larger storage capacity of the ROMs $72_0$ to $72_N$ is required as the number of time $\tau$ for obtaining an interpolated value becomes larger. Furthermore, since the operation of switching among addresses in which the value $x_{n-i} h(iT+\tau)$ in the ROMs $72_0$ to $72_N$ for every change in the interpolating time $\tau$ requires high speed, which causes another problem of a large size of the circuit of the interpolating device and high power consumption.

## SUMMARY OF THE INVENTION

Therefore, an object of the present invention to provide an interpolating device with a small circuit size and low power consumption when interpolating processing is operated at high speed.

The present invention has the following features to achieve the object above.

A first aspect of the present invention is directed to an interpolating device for obtaining an interpolated value of an input signal series at arbitrary time, which includes

a fixed coefficient filter for performing curve interpolation to the input signal series with a fixed coefficient to output an arbitrary output signal series; and linear interpolating means for selecting two output signals adjacent to each other from the output signal series according to time for obtaining the interpolated value to perform linear interpolation between the selected two output signals using a linear interpolation factor according to the time.

As described above, in accordance with the first aspect, curve interpolation is first performed with the fixed coefficient and then linear interpolation is performed with the linear interpolation factor. Thus, only a small number of coefficients to be stored in the interpolating device is required and it is unnecessary to switch among the coefficients for every change in time for obtaining the interpolated value, thereby allowing high-speed interpolating processing.

According to a second aspect of the present invention, in the first aspect,

the fixed coefficient fitter curve interpolates one midpoint positioned between two arbitrary points adjacent to each other with the fixed coefficient to output the output signal series with respect to the two arbitrary points adjacent to each other and the midpoint.

As described above, in accordance with the second aspect, since the fixed coefficient filter obtains one interpolated point between the two arbitrary points adjacent to each other, it is possible to obtain the effect of the first aspect with a simple circuit structure.

According to a third aspect of the present invention, in the first aspect,

the fixed coefficient filter curve interpolates two or more midpoints positioned between two arbitrary points adjacent to each other with the fixed coefficient to output the output signal series with respect to the two arbitrary points adjacent to each other and the two or more midpoints.

As described above, in accordance with the third aspect, since the fixed coefficient filter obtains two or more interpolated points between the two arbitrary points adjacent to each other, it is possible to further improve approximation accuracy (with respect to an actual interpolated value) compared with that of the interpolated value to be obtained in the second aspect.

According to a fourth aspect, in the second aspect,

the fixed coefficient filter includes

a plurality of delay elements for delaying the input signal series by an arbitrary amount of delay; a coefficient multiplying portion including a plurality of coefficient multipliers for multiplying the input signal series and outputs from the plurality of delay elements by the fixed coefficient and then outputting; and an adder for adding all outputs from the plurality of coefficient multipliers included in said coefficient multiplying portion, and the linear interpolating means includes

selecting means for selecting two output signals adjacent to each other from the output signal series according to the time;

linear interpolation factor operating means for operating the time and a predetermined fixed constant to calculate a linear interpolation factor according to the time; and

interpolated value calculating means for performing linear interpolation between the selected two output signals adjacent to each other with the linear interpolation factor to calculate the interpolated value at the time.

As described above, the fourth aspect shows a specific structure of the interpolating device of the second aspect. The interpolating device is structured as in the fourth aspect using adder/subtractor, multiplier/divider, etc., to allow a simple and small sized circuit and low power consumption required for driving the circuit.

According to a fifth aspect, in the third aspect,

the fixed coefficient filter includes

a plurality of delay elements for delaying the input signal series by an arbitrary amount of delay; two or more coefficient multiplying portions including a plurality of coefficient multipliers for multiplying the input signal series and outputs from the plurality of delay elements by the fixed coefficient and then outputting; and two or more adders for adding all outputs from the plurality of coefficient multipliers included in one of the coefficient multiplying portions, and the linear interpolating means includes

selecting means for selecting two output signals adjacent to each other from the output signal series according to the time; linear interpolation factor operating means for operating the time and a predetermined fixed constant to calculate a linear interpolation factor according to the time; and interpolated value calculating means for performing linear interpolation between the selected two output signals adjacent to each other with the linear interpolation factor to calculate the interpolated value at the time.

As described above, the fifth aspect shows a specific structure of the interpolating device of the third aspect. The interpolating device is structured as in the fifth aspect using adder/subtractor, multiplier/divider, etc., to allow a simple and small sized circuit and low power consumption required for driving the circuit.

These and other objects, features, aspects and advantages of the present invention will become more apparent from the following detailed description of the present invention when taken in conjunction with the accompanying drawings.

## BRIEF DESCRIPTION OF THE DRAWINGS

FIG. 1 is a block diagram showing the structure of an interpolating device according to a first embodiment of the present invention;

FIG. 2 is a diagram showing signals outputted from a fixed coefficient filter in FIG. 1;

FIG. 3 is a diagram showing operation of linear interpolating processing to the output signals of the fixed coefficient filter in FIG. 1;

FIG. 4 is a diagram showing operation of linear interpolating processing to the output signals of the fixed coefficient filter in FIG. 1;

FIG. 5 is a block diagram showing the structure of an interpolating device according to a second embodiment of the present invention;

FIG. 6 is a diagram showing signals outputted from a fixed coefficient filter in FIG. 5 and operation of linear interpolating processing to the output signals; and

FIG. 7 is a block diagram showing the structure of the conventional interpolating device.

## DESCRIPTION OF THE PREFERRED EMBODIMENTS

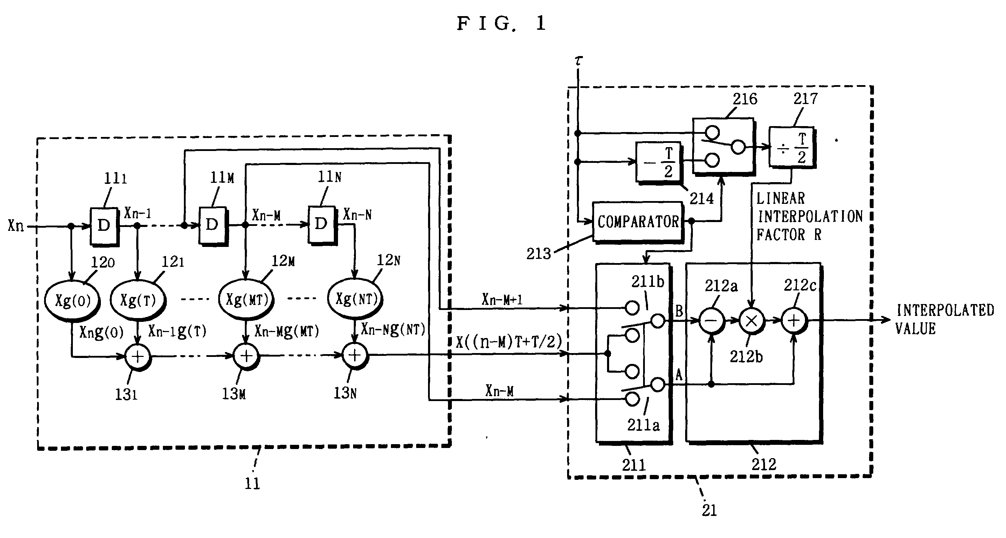

Described below are embodiments of the present invention using FIG. 1 to FIG. 6.

### (First embodiment)

FIG. 1 is a block diagram showing the structure of an interpolating device according to a first embodiment of the present invention.

In FIG. 1, the interpolating device according to the first embodiment of the present invention includes a fixed coefficient filter 11 and a linear interpolating portion 21. The fixed coefficient filter 11 includes delay elements $11_1$ to $11_N$, coefficient multipliers $12_0$ to $12_N$, and adders $13_1$ to $13_N$. A "fixed coefficient" mentioned herein means that the coefficient is fixed regardless of time when interpolation is desired. Therefore, the fixed coefficient filter 11 may be a filter capable of rewriting the coefficient. The linear interpolating portion 21 includes a selecting portion 211, an interpolated value calculating portion 212, a comparator 213, a subtractor 214, a switch 216, and a constant divider 217.

The delay elements $11_1$ to $11_N$ delay an input signal $x_j$ (j is an integer) to make $x_{j-1}$ and then hold $x_{j-1}$. The coefficient multipliers $12_0$ to $12_N$ multiply the input value by a previously stored arbitrary coefficient g(jT). The adders $13_1$ to $13_N$ add output values from the predetermined coefficient multipliers $12_0$ to $12_N$.

The selecting portion 211 includes switches 211a and 211b with two input systems cooperating each other, changing these switches according to a logical value of the comparator 213 to select an input. The interpolated value calculating portion 212 includes a subtractor 212a, a multiplier 212b, and an adder 212c, performing linear interpolating processing with the value selected by the switches 211a and 211b and a linear interpolation factor R given from the constant divider 217. The comparator 213 makes an instruction of switching of the selecting portion 211 and the switch 216 according to the inputted interpolating time τ. The subtractor 214 subtracts the inputted interpolating time τ by T/2. The constant divider 217 divides the input value by T/2.

Described first is the processing of the fixed coefficient filter 11 in the interpolating device according to the first embodiment.

The fixed coefficient filter 11 performs processing of interpolating a value of a midpoint between two arbitrary points in the input signal series $x_n$, that is, double interpolating processing. In FIG. 1, inputted in the fixed coefficient filter 11 is $x_n$. The delay elements $11_1$ to $11_N$ hold $x_{n-1}$ to $x_{n-N}$, respectively, as delay goes on. The coefficient multipliers $12_0$ to $12_N$ multiply $x_n$ - $X_{n-N}$ by coefficients g(0) to g(NT), respectively. The adders $13_1$ to $13_N$ sequentially add outputs from the coefficient multipliers $12_0$ to $12_N$. Thus, the fixed coefficient filter 11 obtains a value $z_n$ in the following equation (2) as an output from the adder 13N.

$$Zn = \sum_{i=0}^{N} x_{n-i}g(iT) \qquad (2)$$

Here, an interpolation coefficient g(iT) to be stored in the coefficient multipliers $12_0$ to $12_N$ is selected so that the value of $Z_n$ in the equation (2) is a midpoint value $x((n-M)T+T/2)$ between $x_{n-M}$ and $X_{n-M+1}$. Thus, the equation (2) can be rewritten as the following equation (3), where M is an arbitrary integer which satisfies 0<M<N.

$$x((n-M)T+\frac{T}{2}) = \sum_{i=0}^{N} X_{n-i}g(iT) \qquad (3)$$

On the other hand, as described above, among the delay elements $11_1$ to $11_N$, there must exist delay elements which hold the values of $X_{n-M}$ and $X_{n-M+1}$. Therefore, the fixed coefficient filter 11 further outputs $X_{n-M}$ and $X_{n-M+1}$.

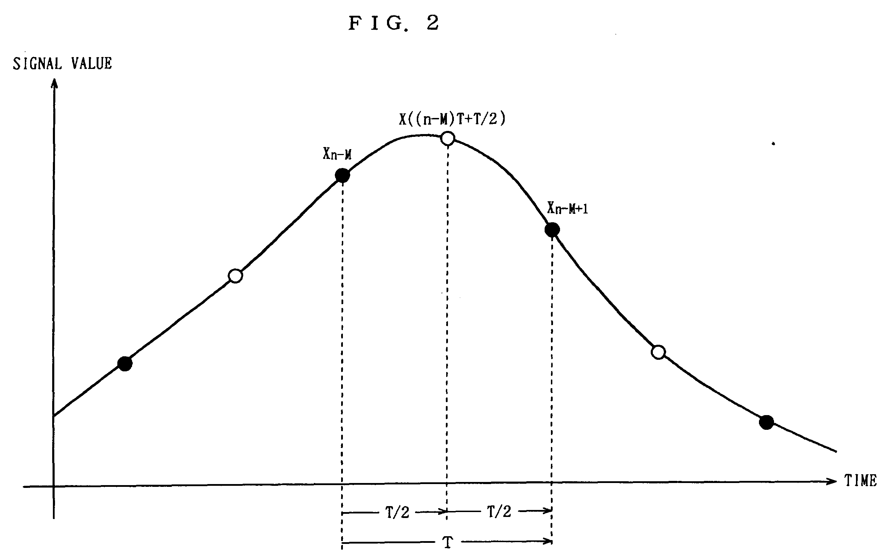

In this way, the fixed coefficient filter 11 outputs three points, $X_{n-M}$, $X_{n-M+1}$, and a midpoint therebetween, that is, values of three points aligned at an interval of time T/2. The relation between the time and values of these three point is shown in FIG. 2. In FIG. 2, points represented as black circles (● marks; ditto for the following) are points obtained by delaying the input signal series $x_n$, in which $X_{n-M}$ and $X_{n-M+1}$ exist. Furthermore, in FIG. 2, points represented as white circles

($\bigcirc$ marks; ditto for the following) are interpolated midpoints of the input signal series $x_n$, in which the value $x((n-M)T+T/2)$ shown in the equation (2) exists.

In the interpolating device according to the first embodiment of the present invention, the fixed coefficient filter 11 simultaneously outputs the values of three points, while these outputs may be serial-parallel converted using a fixed coefficient filter for sequentially outputting the values of three points.

Described next is the processing of the linear interpolating portion 21 in the interpolating device according to the first embodiment.

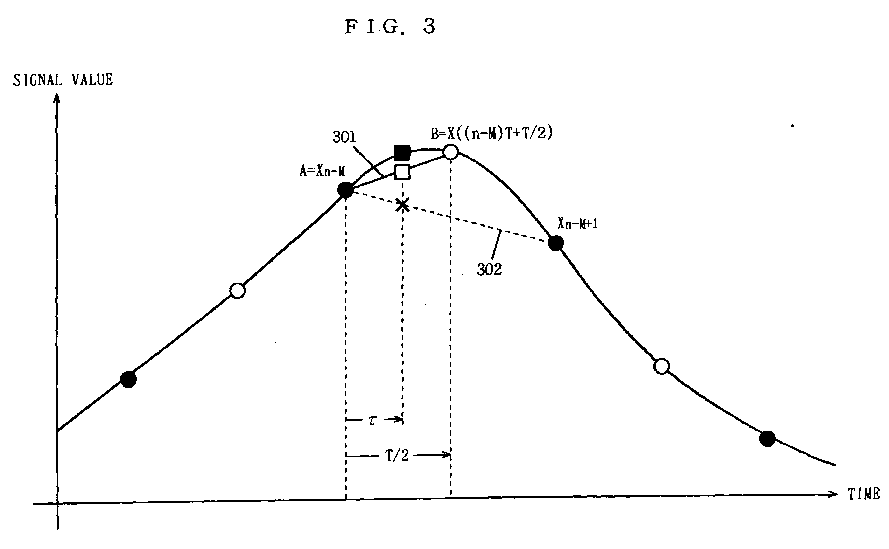

Now, assume that an interpolated value at time $(n-M)T+\tau$ between $x_{n-M}$ and $x_{n-M+1}$ is to be obtained. Here, where $0 \leq \tau < T/2$, the comparator 213 outputs a logical value "0". According to the logical value "0", the switches 211a and 211b in the selecting portion 211 cooperatively select $x_{n-M}$ as A and $x((n-M)T+T/2)$ as B from the outputs from the fixed coefficient filter 11. Furthermore, the switch 216 selects a value $\tau$ according to the logical value "0". The constant divider 217 divides the value $\tau$ selected by the switch 216 by $T/2$, and outputs the value of $\tau/(T/2)$ as a linear interpolation factor R to the interpolated value calculating portion 212. The interpolated value calculating portion 212 interpolates between the values of A and B selected by the switches 211a and 211b using the linear interpolation factor R. Specifically, the subtractor 212a in the interpolated value calculated portion 212 subtracts A from B to output B-A. The multiplier 212b multiplies B-A by the linear interpolation factor R to output R(B-A). The adder 212c then adds R(B-A) to A to output an interpolated value A+R(B-A). This interpolated value is, as shown in FIG. 3, a value at the interpolating time $\tau$ on a line segment 301, that is, a value represented as a white square ($\square$ mark; ditto for the following) in FIG. 3. This value approximates to a true interpolated value represented by a black square ($\blacksquare$ mark; ditto for the following) in FIG. 3, resulting in a good approximation value.

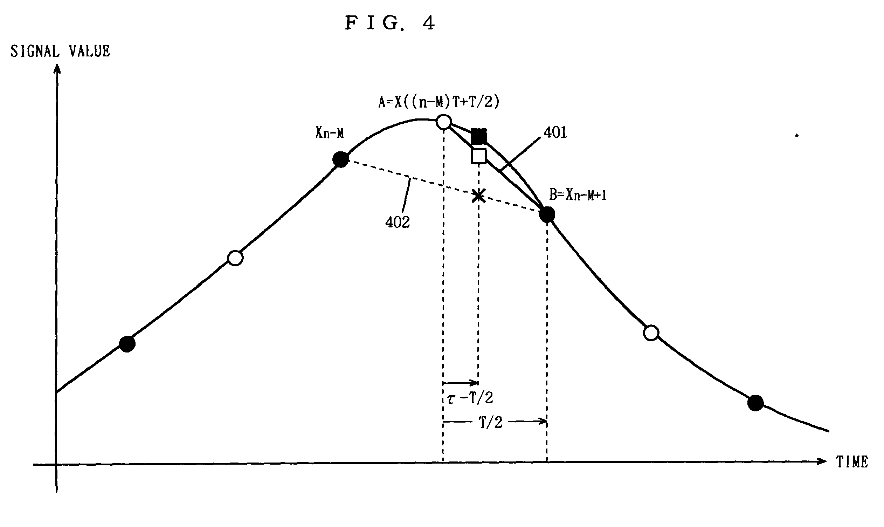

Next, where $T/2 \leq \tau < T$, the comparator 213 outputs a logical value "1". According to the logical value "1", the switches 211a and 211b in the selecting portion 221 cooperatively select $x((n-M)T+T/2)$ as A and $x_{n-M+1}$ as B from the outputs from the fixed coefficient filter 11. Furthermore, the switch 216 selects a value $\tau-T/2$ outputted from the constant subtractor 214 according to the logical value "1". The constant divider 217 divides the value $\tau-T/2$ selected by the switch 216 by $T/2$, and outputs the value of $(\tau-T/2)/(T/2)$ as a linear interpolation factor R to the interpolated value calculating portion 212. The interpolated value calculating portion 212 outputs an interpolated value A+R(B-A) in the same manner as described where $0 \leq \tau < T/2$. This interpolated value is, as shown in FIG. 4, a value at the interpolating time $\tau$ on a line segment 401, that is, a value represented as a white square in FIG. 4. This value approximates to a true interpolated value represented by a black square in FIG. 4, resulting in a good approximation value.

As described above, the interpolating device according to the first embodiment of the present invention, curve interpolation is first performed with the fixed coefficient and then linear interpolation is performed with the linear interpolation factor. Thus, only a small number of coefficients to be stored in the interpolating device is required and it is unnecessary to switch among the coefficients for every change in time for obtaining the interpolated value, thereby allowing high speed interpolating processing.

It is possible to perform linear interpolating processing between $x_{n-M}$ and $X_{n-M+1}$ without using the fixed coefficient filter 11 in order to obtain an approximation value of the true interpolated value in a simplest way. However, in this case, as represented as an x mark on a line segment 302 in FIG. 3 and an x mark on a line segment 402 in FIG. 4, an error from the true interpolated value becomes large. On the other hand, in the interpolating device according to the first embodiment of the present invention, use of both of the fixed coefficient filter 11 and the linear interpolating portion 21 realizes an improvement in interpolation accuracy.

(Second embodiment)

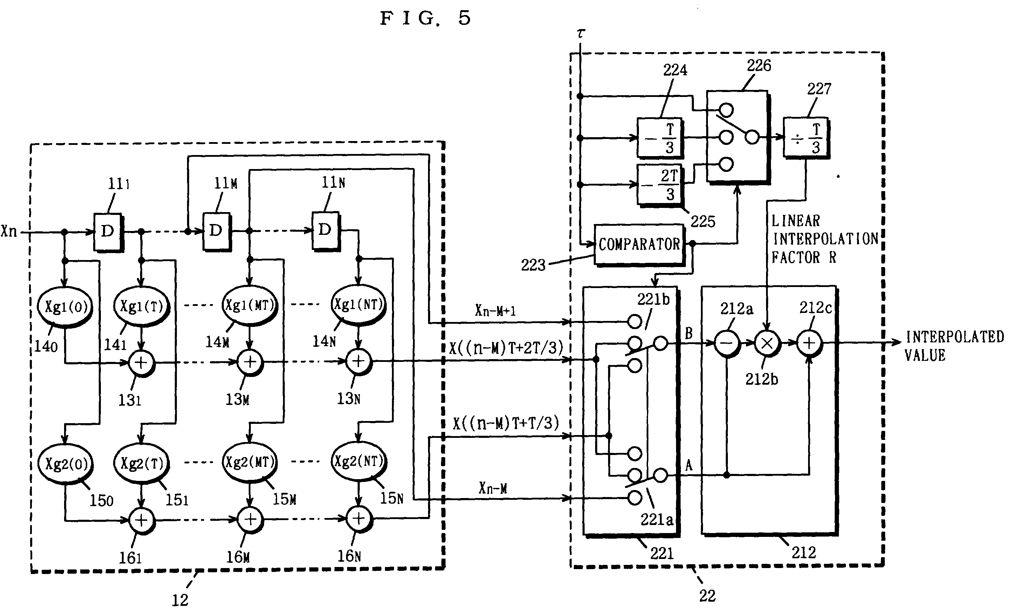

FIG. 5 is a block diagram showing the structure of an interpolating device according to a second embodiment of the present invention. In FIG. 5, the interpolating device according to the second embodiment of the present invention includes a fixed coefficient filter 12 and a linear interpolating portion 22. The fixed coefficient filter 12 includes delay elements $11_1$ to $11_N$, first coefficient multipliers $14_0$ to $14_N$, second coefficient multipliers $15_0$ to $15_N$, first adders $13_1$ to $13_N$, and second adders $16_1$ to $16_N$. Representation of a "fixed coefficient" in the second embodiment also means, as in the above first embodiment, that the coefficient is fixed regardless of time when interpolation is desired. Therefore, the fixed coefficient filter 12 may be a filter capable of rewriting the coefficient. The linear interpolating portion 22 includes a selecting portion 221, an interpolated value calculating portion 212, a comparator 223, a first subtractor 224, a second subtractor 225, a switch 226, and a constant divider 227.

In the second embodiment, since the delay elements $11_1$ to $11_N$, the first adders $13_1$ to $13_N$ and the interpolated value calculating portion 212 are the same structural portions as those in the above first embodiment, the same reference numerals are provided therefor below and their description is omitted. Further, although the second adders $16_1$ to $16_N$ are provided with different reference numerals from those of the first adders $13_1$ to $13_N$ in order to show the existence of a group of adders of two systems in the fixed coefficient filter 12, their structure and function are exactly the same as those of the first adders $13_1$ to $13_N$.

The coefficient multipliers $14_0$ to $14_N$ multiply an input value by a previously stored arbitrary coefficient g1(iT). The coefficient multipliers $15_0$ to $15_N$ multiply an input value by a previously stored arbitrary coefficient g2(iT). The adders $13_1$ to $13_N$ add output values from the predetermined coefficient multipliers $14_0$ to $14_N$. The adders $16_1$ to $16_N$ add output values from the predetermined coefficient multipliers $15_0$ to $15_N$.

The selecting portion 221 includes switches 221a and 221b with three input systems cooperating each other, changing these switches according to a logical value of the comparator 223 to select an input. The comparator 223 makes an instruction of switching of the selecting portion 221 and the switch 226 according to the inputted interpolating time $\tau$. The subtractors 224 and 225 subtract the inputted interpolating time $\tau$ by T/3 and 2T/3, respectively. The constant divider 227 divides the input value by T/3.

Described first is the processing of the fixed coefficient filter 12 in the interpolating device according to the second embodiment.

The fixed coefficient filter 12 performs processing of interpolating values of two new points which divide in three between two arbitrary points in the input signal series $x_n$, that is, triple interpolating processing. Here, the interpolation coefficient g1(iT) to be stored in the coefficient multipliers $14_0$ to $14_N$ is selected so that the value of $z_n$ in the equation (2) is a value x((n-M)T+2T/3) in a proceeding side of the new two points which divide in three between $x_{n-M}$ and $x_{n-M+1}$. Further, the interpolation coefficient g2(iT) to be stored in the coefficient multipliers $15_0$ to $15_N$ is selected so that the value of $z_n$ in the equation (2) is a value x((n-M)T+T/3) in a trailing side of the new two points which divide in three between $x_{n-M}$ and $x_{n-M+1}$.

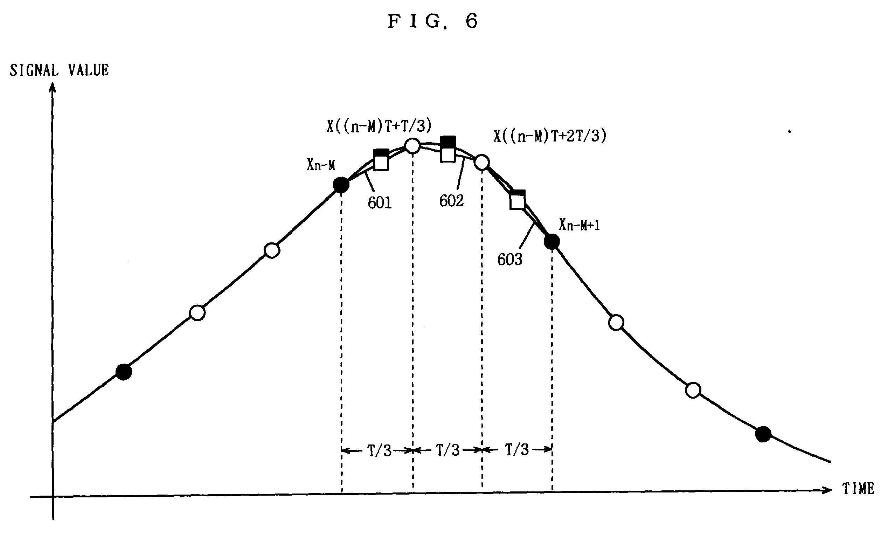

Thus, the fixed coefficient filter 12 outputs four points, $x_{n-M}$, $x_{n-M+1}$, and the new two points which divide in three therebetween, that is, values of four points aligned at an interval of time T/3. The relation between the time and values of these four points is shown in FIG. 6. In FIG. 6, points represented as black circles are points obtained by delaying the input signal series $x_n$, in which $x_{n-M}$ and $x_{n-M+1}$ exist. Furthermore, in FIG. 6, points represented as white circles are points interpolated in the input signal series $x_n$, in them the value x((n-M)T+T/3) and x((n-M)T+2T/3) shown in the equation (2) exist.

Described next is the processing of the linear interpolating portion 22 in the interpolating device according to the second embodiment.

How, assume that an interpolated value at time (n-M)T+$\tau$ between $x_{n-M}$ and $x_{n-M+1}$ is to be obtained. Here, where $0 \leq \tau < T/3$, the comparator 223 outputs a logical value "0". According to the logical value "0", the switches 221a and 221b in the selecting portion 221 cooperatively select $x_{n-M}$ as A and x((n-M)T+T/3) as B from the outputs from the fixed coefficient filter 12. Furthermore, the switch 226 selects a value $\tau$ according to the logical value "0". The constant divider 227 divides the value $\tau$ selected by the switch 226 by T/3, and out-

puts the value of $\tau$ /(T/3) as a linear interpolation factor R to the interpolated value calculating portion 212. The interpolated value calculating portion 212 outputs an interpolated value A+R(B-A) in the same manner as that in the above first embodiment. This interpolated value A+R(B-A) outputted from the interpolated value calculating portion 212 is, as shown in FIG. 6, a value represented as a white square at interpolating time $\tau$ on a line segment 601. This value approximates to a true interpolated value represented as a black square in FIG. 6, resulting in a good approximation value.

Next, where $T/3 \leq \tau < 2T/3$, the comparator 223 outputs a logical value "1". According to the logical value "1", the switches 221a and 221b in the selecting portion 221 cooperatively select x((n-M)T+T/3) as A and x((n-M)T+2T/3) as B from the outputs from the fixed coefficient filter 12. The switch 226 selects a value $\tau$ -T/3 outputted from the constant subtractor 224 according to the logical value "1". The constant divider 227 divides the value $\tau$-T/3 selected by the switch 226 by T/3, and outputs the value of ($\tau$-T/3)/(T/3) as a linear interpolation factor R to the interpolated value calculating portion 212. Then, the interpolated value A+R(B-A) outputted from the interpolated value calculating portion 212 based on the linear interpolation factor R is, as shown in FIG. 6, a value represented as a white square at the interpolating time $\tau$ on a line segment 602. This value approximates to a true interpolated value represented by a black square in FIG. 6, resulting in a good approximation value.

Next, where $2T/3 \leq \tau < T$, the comparator 223 outputs a logical value "2". According to the logical value "2", the switches 221a and 221b in the selecting portion 221 cooperatively select x((n-M)T+2T/3) as A and $x_{n-M+1}$ as B from the outputs from the fixed coefficient filter 12. The switch 226 selects a value $\tau$-2T/3 outputted from the constant subtractor 224 according to the logical value "2". The constant divider 227 divides the value $\tau$-2T/3 selected by the switch 226 by T/3, and outputs the value of ($\tau$-2T/3)/T/3) as a linear interpolation factor R to the interpolated value calculating portion 212. Then, the interpolated value A+R(B-A) outputted from the interpolated value calculating portion 212 based on the linear interpolation factor R is, as shown in FIG. 6, a value represented as a white square at the interpolating time $\tau$ on a line segment 603. This value approximates to a true interpolated value represented by a black square in FIG. 6, resulting in a good approximation value.

As described above, the interpolating device according to the second embodiment of the present invention, double curve interpolation is first performed with the fixed coefficient and then linear interpolation is performed with the linear interpolation factor. Therefore, it is possible to obtain an interpolated value which approximates more to the true interpolated value compared to the above first embodiment.

In the description of the above second embodiment, it is assumed that the logical values outputted from the comparator 223 are "0", "1", and "2". For digital control with binary signals in a specific embodiment, however, use of two bits may be allowed for separate control with "00", "01 (or 10)", "11", etc.

Furthermore, when the size of the circuit of the fixed coefficient filter has no limitation, more than triple interpolation by the fixed coefficient filter can further improve the interpolation accuracy.

While the invention has been described in detail, the foregoing description is in all aspects illustrative and not restrictive. It is understood that numerous other modifications and variations can be devised without departing from the scope of the invention.

## Claims

1. An interpolating device for obtaining an interpolated value of an input signal series at arbitrary time, comprising:

   a fixed coefficient filter for performing curve interpolation to said input signal series with a fixed coefficient to output an arbitrary output signal series; and
   linear interpolating means for selecting two output signals adjacent to each other from said output signal series according to time for obtaining the interpolated value to perform linear interpolation between the selected two output signals using a linear interpolation factor according to the time.

2. The interpolating device according to claim 1, wherein

   said fixed coefficient filter curve interpolates one midpoint positioned between two arbitrary points adjacent to each other with said fixed coefficient to output the output signal series with respect to the two arbitrary points adjacent to each other and the midpoint.

3. The interpolating device according to claim 1, wherein

   said fixed coefficient filter curve interpolates two or more midpoints positioned between two arbitrary points adjacent to each other with said fixed coefficient to output the output signal series with respect to the two arbitrary points adjacent to each other and the two or more midpoints.

4. The interpolating device according to claim 2,

   said fixed coefficient filter comprising:

   a plurality of delay elements for delaying said input signal series by an arbitrary amount of delay;
   a coefficient multiplying portion including a plurality of coefficient multipliers for multiplying said input signal series and outputs from said plurality of delay elements by said fixed coefficient and then outputting; and
   an adder for adding all outputs from said plurality of coefficient multipliers included in said coefficient multiplying portion, and said linear interpolating means comprising:

      selecting means for selecting two output signals adjacent to each other from said output signal series according to said time;
      linear interpolation factor operating means for operating said time and a predetermined fixed constant to calculate said linear interpolation factor according to the time; and
      interpolated value calculating means for performing linear interpolation between said selected two output signals adjacent to each other with said linear interpolation factor to calculate the interpolated value at said time.

5. The interpolating device according to claim 3,

   said fixed coefficient filter comprising:

   a plurality of delay elements for delaying said input signal series by an arbitrary amount of delay;
   two or more coefficient multiplying portions including a plurality of coefficient multipliers for multiplying said input signal series and outputs from said plurality of delay elements by said fixed coefficient and then outputting; and
   two or more adders for adding all outputs from said plurality of coefficient multipliers included in one of said coefficient multiplying portions, and said linear interpolating means comprising:

      selecting means for selecting two output signals adjacent to each other from said output signal series according to said time;
      linear interpolation factor operating means for operating said time and a predetermined fixed constant to calculate said linear interpolation factor according to the time; and

interpolated value calculating means for performing linear interpolation between said selected two output signals adjacent to each other with said linear interpolation factor to calculate the interpolated value at said time.

EP 0 884 687 A1

Xn → D (111) → Xn-1 ⋯ D (11M) → Xn-M → D (11N) → Xn-N

Xg(0) (120)  Xg(T) (121) ---- Xg(MT) (12M) ---- Xg(NT) (12N)

Xng(0)   Xn-1g(T)   Xn-Mg(MT)   Xn-Ng(NT)

+ (131)   + (13M)   + (13N)

Xn-M+1

X((n-M)T+T/2)

Xn-M

τ

216   217

$-\dfrac{T}{2}$   $\div \dfrac{T}{2}$

214

COMPARATOR

213

LINEAR INTERPOLATION FACTOR R

211b   212a   212c

B

A

211a

211

212

− (212a)   × (212b)   + (212c)

INTERPOLATED VALUE

21

11

9

# F I G. 2

SIGNAL VALUE

$X((n-M)T+T/2)$

$X_{n-M}$

$X_{n-M+1}$

TIME

T/2 → T/2 →

T

EP 0 884 687 A1

FIG. 3

# F I G. 4

SIGNAL VALUE

$A = X((n-M)T + T/2)$

$X_{n-M}$

401

402

$B = X_{n-M+1}$

$\tau - T/2$

$T/2$

TIME

# FIG. 5

INTERPOLATED VALUE

LINEAR INTERPOLATION FACTOR R

EP 0 884 687 A1

13

FIG. 6

EP 0 884 687 A1

FIG. 7

European Patent Office

## EUROPEAN SEARCH REPORT

Application Number

EP 98 11 0175

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 365 468 A (Y. KAKUBO ET AL) 15 November 1994 * column 6, line 20 - line 64; figures 1,2 * | 1-5 | G06F17/17 |
| A | PATENT ABSTRACTS OF JAPAN vol. 13, no. 298 (E-784), 10 July 1989 & JP 01 077327 A (TOSHIBA CORP), 23 March 1989 * abstract * | 1-5 | |
| A | PATENT ABSTRACTS OF JAPAN vol. 17, no. 691 (E-1479), 17 December 1993 & JP 05 235698 A (YAMAHA CORP), 10 September 1993 * abstract * | 1-5 | |
| D,A | PATENT ABSTRACTS OF JAPAN vol. 96, no. 12, 26 December 1996 & JP 08 204506 A (HITACHI DENSHI LTD), 9 August 1996 * abstract * | | TECHNICAL FIELDS SEARCHED (Int.Cl.6) G06F |

The present search report has been drawn up for all claims

| Place of search | Date of completion of the search | Examiner |
|---|---|---|
| BERLIN | 16 September 1998 | Abram, R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)